# FASCICULE DE BREVET EUROPEEN

(11) **EP 3 329 493 B1**
(45) Date de publication et mention de la délivrance du brevet: **22.05.2019**
(21) Numéro de dépôt: 16745707.6
(22) Date de dépôt: 28.07.2016
(51) Int. Cl.: G21C 7/12, G21C 7/14, G21C 1/32, G21C 9/02

(54) **RÉACTEUR NUCLÉAIRE AVEC ENTRAÎNEMENT DES ORGANES DE CONTRÔLE DE LA RÉACTIVITÉ DU COEUR DE TYPE VIS-ÉCROU**
KERNREAKTOR MIT SCHRAUBENMUTTERANTRIEB DER KERNREAKTIVITÄTSSTEUERELEMENTE
NUCLEAR REACTOR WITH SCREW-NUT DRIVE OF THE CORE REACTIVITY CONTROL MEMBERS

(30) Priorité: 29.07.2015 FR 1557278
(43) Date de publication de la demande: 06.06.2018
(73) Titulaire: Société Technique pour l'Energie Atomique, 91190 Villiers Le Bacle (FR)
(72) Inventeur: RANC, Lionel, 84120 Pertuis (FR); DUMANOIS, Charles, 83560 Rians (FR); ROUILLER, Jean-Luc, 13760 Saint-Cannat (FR)
(74) Mandataire: Lavoix
(86) Numéro de dépôt international: PCT/EP2016/068114
(87) Numéro de publication internationale: WO 2017/017242

(56) Documents cités:
- EP-A2- 0 034 517
- US-A1- 2010 316 177
- US-A1- 2015 139 380

## Description

L'invention concerne en général les réacteurs nucléaires, et notamment les mécanismes d'entraînement des organes contrôlant la réactivité du coeur.

Plus précisément, l'invention concerne un réacteur nucléaire du type comprenant :
- une cuve ayant un axe central, contenant un liquide primaire ;
- une pluralité d'assemblages de combustible nucléaire, formant un coeur placé dans la cuve ;
- une pluralité d'organes de contrôle de la réactivité du coeur ;
- une pluralité de mécanismes d'entraînement des organes de contrôle parallèlement à l'axe central ;
   chaque mécanisme d'entraînement comprenant :
   - un moteur comportant un stator et un rotor susceptible d'être entraîné en rotation par le stator ;
   - un organe menant comprenant une partie d'entraînement formant l'un d'une vis ou d'un écrou ;
   - un dispositif de liaison en rotation de l'organe menant au rotor, ayant un organe d'application d'un couple rotatif du rotor à l'organe menant ;
   - un organe mené lié en translation à un des organes de contrôle et comprenant l'autre d'une vis ou d'un écrou, la vis et l'écrou coopérant de manière à ce qu'une rotation de l'organe menant par rapport au stator se traduise par une translation de l'organe mené parallèlement à l'axe central par rapport au stator ;
   - un dispositif de blocage comprenant au moins un organe de blocage sélectivement mobile entre une position de blocage dans laquelle l'organe menant est bloqué en translation parallèlement à l'axe central par rapport au rotor, et une position de largage dans laquelle l'organe menant et l'organe mené sont libres en translation parallèlement à l'axe central par rapport au rotor entre une position extrême haute et une position extrême basse.

Un tel réacteur nucléaire est connu de EP0034517. Les mécanismes d'entraînement de ce réacteur sont situés hors de la cuve, de telle sorte que le réacteur nucléaire présente une hauteur importante. Par ailleurs, ces mécanismes présentent des diamètres élevés, de telle sorte que le nombre d'organes de contrôle qu'il est possible d'implanter dans le réacteur nucléaire est fortement limité. Ceci est particulièrement problématique quand le réacteur nucléaire fonctionne avec un liquide primaire dépourvu de bore.

US2015/0139380 décrit un réacteur nucléaire avec des mécanismes d'entrainement des organes de contrôle de type à cliquets, immergés à l'intérieur de la cuve.

US2010/0316177 décrit un réacteur nucléaire avec des mécanismes d'entrainement de type vis-écrou, immergés à l'intérieur de la cuve. Le dispositif de blocage comporte de multiples bobines, agencées sur une grande hauteur. Ceci est une source de défaillances.

Dans ce contexte, l'invention vise à proposer un réacteur nucléaire qui résout le problème ci-dessus.

A cette fin, l'invention porte sur un réacteur nucléaire du type précité, caractérisé en ce que dans chaque mécanisme d'entraînement :
- le moteur est entièrement immergé dans le liquide primaire à l'intérieur de la cuve ;
- le rotor présente un passage central, l'organe d'application du couple rotatif étant situé dans ou à proximité du passage central ;
- l'organe menant comprend une partie de liaison engagée dans le passage central et coopérant avec l'organe d'application du couple rotatif, la partie de liaison étant libre en translation dans le passage central par rapport au rotor quand le ou chaque organe de blocage est en position de largage.

Du fait que les mécanismes d'entraînement sont entièrement immergés dans le liquide primaire à l'intérieur de la cuve, la hauteur totale du réacteur nucléaire est réduite, puisque celui-ci ne présente plus de structures en saillie au-dessus de la cuve.

Par ailleurs, l'organe d'application du couple du rotor à l'organe menant est situé immédiatement à proximité du rotor, voire même dans le passage interne du rotor. Dans EP0034517, l'organe d'application du couple du rotor à l'organe menant est déporté à une distance importante du rotor. Le mécanisme d'entraînement de EP0034517 doit comporter un arbre creux transmettant le couple du rotor jusqu'à l'organe d'application du couple rotatif. Le mécanisme doit également prévoir un guidage en rotation de l'arbre creux, du fait du porte-à-faux important séparant le rotor de l'organe d'application du couple rotatif. Un tel agencement augmente de manière significative l'encombrement radial du mécanisme d'entrainement. Ces contraintes sont supprimées dans l'invention du fait de la position de l'organe d'application du couple rotatif.

Par ailleurs, le fait que l'organe menant comporte une partie de liaison libre en translation dans le passage central en cas de largage, fait que le moteur ne contribue pas à la hauteur totale du mécanisme d'entrainement. Celle-ci est commandée par les longueurs respectives de l'organe menant et de l'organe mené et par la position haute extrême. Ainsi, il est possible d'agencer les bobines du rotor et du stator de manière à minimiser le diamètre externe du moteur, en répartissant les conducteurs sur une plus grande hauteur.

Le diamètre du mécanisme d'entraînement peut ainsi être inférieur au pas des assemblages de combustible, de telle sorte qu'il est possible de prévoir jusqu'à un mécanisme d'entraînement pour chaque assemblage de combustible.

Le réacteur nucléaire peut en outre présenter une ou plusieurs des caractéristiques ci-dessous, considérée(s) individuellement ou selon toutes les combinaisons techniquement possibles :
- la partie de liaison de l'organe menant comprend un premier tronçon coopérant avec l'organe d'application du couple rotatif dans la position extrême haute, et un second tronçon coopérant avec l'organe d'application du couple rotatif dans la position extrême basse ;
- un réacteur tel que décrit ci-dessus, l'organe d'application du couple rotatif comprend une pluralité d'éléments rotatifs susceptibles de rouler le long de la partie de liaison quand ladite partie de liaison se déplace parallèlement à l'axe central ;
- la partie de liaison considérée en section perpendiculairement à l'axe central, présente au moins un côté plat ;
- le passage est délimité par une paroi périphérique séparée de la partie de liaison par un interstice d'épaisseur supérieure à 10 mm ;
- le ou chaque organe de blocage est monté sur un support solidaire du rotor ;
- le dispositif de blocage comprend au moins une masse polaire liée à le ou un des organes de blocage et au moins une bobine électromagnétique coopérant avec la ou chaque masse polaire, la ou chaque bobine électromagnétique étant fixe en translation et en rotation par rapport au stator ;
- le dispositif de blocage comprend au moins un organe élastique interposé entre l'organe menant et le support, et sollicitant l'organe menant vers la position extrême basse.
- chaque mécanisme d'entraînement comprend un dispositif de guidage en translation et de blocage en rotation de l'organe mené par rapport au stator ;
- chaque mécanisme d'entraînement comprend un châssis supérieur sur lequel sont montés le moteur et le dispositif de blocage, et un châssis inférieur sur lequel est monté le dispositif de guidage en translation et de blocage en rotation, les châssis supérieur et inférieur étant fixés de manière amovible l'un à l'autre de telle sorte que le châssis inférieur soit plus près du coeur que le châssis supérieur ;
- la vis et l'écrou constituent une liaison irréversible, prévue pour qu'une sollicitation verticale appliquée à l'organe mené ne soit pas convertie en un mouvement de rotation de l'organe menant.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une représentation schématique simplifiée d'un réacteur nucléaire conforme à l'invention ;
- la figure 2 est une représentation détaillée, en section, du mécanisme d'entraînement d'un organe de contrôle de la réactivité du coeur du réacteur nucléaire de la figure 1 ; et
- la figure 3 est une vue en section, considérée selon l'incidence des flèches III de la figure 2.

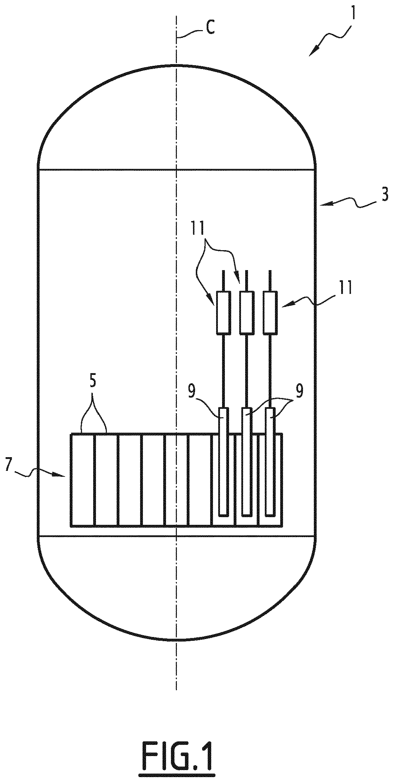

Le réacteur nucléaire 1 représenté sur la figure 1 est un réacteur connu sous le sigle SMR (Small and Médium Reactor, ou Réacteur petit et moyen). Ce type de réacteur équipe par exemple de petites installations nucléaires, d'une puissance de quelques centaines de MWe. Ce réacteur est typiquement du type à eau pressurisé (PWR). En variante, le réacteur est de type à eau bouillante (BWR).

Le réacteur 1 comprend une cuve 3 ayant un axe central C, une pluralité d'assemblages de combustible nucléaire 5, formant un coeur 7 placé dans la cuve 3, une pluralité d'organes 9 de contrôle de la réactivité du coeur 7, et une pluralité de mécanismes 11 d'entraînement des organes de contrôle 9 parallèlement à l'axe central C.

Sur la figure 1, seul un petit nombre d'assemblages de combustible nucléaire, d'organes de contrôle et de mécanismes d'entraînement ont été représentés. En réalité, chaque réacteur nucléaire comporte un grand nombre d'assemblages de combustible nucléaire et de même un grand nombre d'organes de contrôle et de mécanismes d'entraînement.

L'axe central C est typiquement vertical ou sensiblement vertical. La cuve 3 est sensiblement de révolution autour de l'axe central C.

La cuve 3 contient le liquide primaire du réacteur nucléaire. Typiquement, dans un réacteur de type SMR, le pressuriseur et le ou les générateurs de vapeur sont logés à l'intérieur de la cuve 3. Ces éléments ne sont pas représentés sur la figure 1.

Les assemblages de combustible nucléaire 5 sont des éléments allongés parallèlement à l'axe central, de forme prismatique, placés les uns contre les autres.

Les organes 9 de contrôle de la réactivité du coeur sont connus sous le nom de barre de contrôle ou grappe de contrôle. Chacun comporte une partie constituée d'un matériau neutrophage. Chaque organe de contrôle est de forme allongé parallèlement à l'axe central C, et de section adaptée pour permettre l'insertion de l'organe de contrôle dans un canal non représenté ménagé au centre d'un assemblage de combustible nucléaire 5.

Chaque mécanisme d'entraînement 11 est prévu pour déplacer un des organes de contrôle parallèlement à l'axe central C, de manière à l'extraire entièrement hors de l'assemblage de combustible nucléaire 5 correspondant, ou à l'insérer sur une longueur déterminée à l'intérieur de l'assemblage de combustible nucléaire.

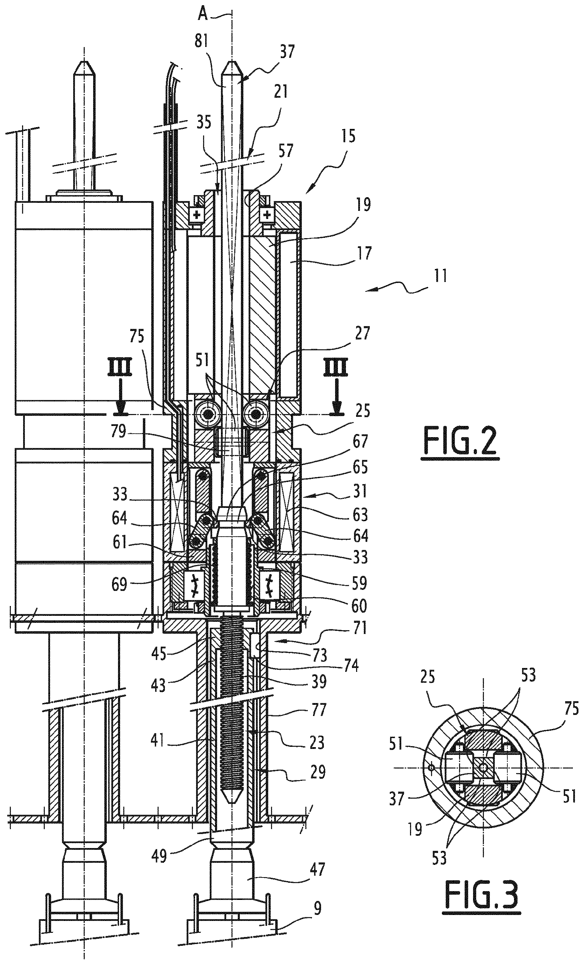

Comme visible sur la figure 2, chaque mécanisme d'entraînement 11 comprend :
- un moteur 15 comportant un stator 17 et un rotor 19 susceptible d'être entraîné en rotation par le stator 17 ;
- un organe menant 21 comprenant une partie d'entraînement 23 formant l'un d'une vis ou d'un écrou ;
- un dispositif 25 de liaison en rotation de l'organe menant 21 au rotor 19, ayant un organe 27 d'application d'un couple rotatif du rotor à l'organe menant ;
- un organe mené 29 lié en translation à l'un des organes de contrôle 9 et comprenant l'autre d'une vis ou d'un écrou ;
- un dispositif 31 de blocage, comprenant au moins un organe de blocage 33 sélectivement mobile entre une position de blocage dans laquelle l'organe menant 21 est bloqué en translation parallèlement à l'axe central C par rapport au rotor 19, et une position de largage dans laquelle l'organe menant 21 et l'organe mené 29 sont libres en translation parallèlement à l'axe central C par rapport au rotor 19.

Les moteurs 15 sont entièrement immergés dans le liquide primaire à l'intérieur de la cuve. Plus généralement, les mécanismes d'entraînement 11 sont entièrement immergés dans le liquide primaire à l'intérieur de la cuve 3. On entend par là que, à la différence de EP0034517, aucun des éléments du mécanisme d'entraînement ne fait saillie en dehors de la cuve 3. Tout particulièrement, le moteur 15, les organes menant et mené 21 et 29, le dispositif de blocage 31 sont immergés dans le liquide primaire à l'intérieur de la cuve 3. Typiquement, tous ces éléments sont immergés en permanence dans le liquide primaire.

Seuls des conducteurs électriques raccordant le mécanisme d'entraînement à une source de courant électrique ou à des organes électroniques de détection sortent de la cuve.

Le stator 17 présente une forme cylindrique, et présente un axe A parallèle à l'axe central C.

Le rotor 19 est disposé à l'intérieur du stator 17, et présente une forme cylindrique coaxiale à l'axe A. Il présente un passage central 35, s'étendant selon l'axe A.

L'organe menant 21, outre la partie d'entraînement 23, comporte une partie de liaison 37 engagée dans le passage central 35. L'organe menant 21 est une tige de grande longueur parallèlement à l'axe central C, la partie d'entraînement 23 constituant le tronçon inférieur de ladite tige et la partie de liaison 37 le tronçon supérieur de ladite tige. La partie d'entraînement 23 est solidaire de la partie de liaison 37.

Dans la présente description, les termes inférieur et supérieur, le haut et le bas, le dessus et le dessous, s'entendent relativement à une direction verticale, correspondant sensiblement à l'axe central C.

Dans l'exemple représenté, la partie d'entraînement 23 forme une vis portant un filetage externe 39. Ce filetage s'étend sensiblement sur toute la longueur de la partie d'entraînement 23.

Dans ce cas, l'organe mené 29 comporte une partie tubulaire 41, une extrémité supérieure 43 de ladite partie tubulaire portant un écrou 45. L'écrou 45 présente un taraudage interne coopérant avec le filetage externe 39 de la vis.

En variante, la partie d'entraînement 23 porte un écrou et l'organe mené 29 comporte une partie formant une vis et coopérant avec l'écrou.

La vis 23 et l'écrou 45 coopèrent ainsi de telle sorte qu'une rotation de l'organe menant 21 par rapport au stator 17 se traduit par une translation de l'organe mené 29 parallèlement à l'axe central C par rapport au stator 17. La coopération de la vis et de l'écrou permet, en fonctionnement normal, de contrôler la position d'insertion de l'organe de contrôle 9 dans l'assemblage de combustible 5 correspondant. Le fonctionnement normal correspond à la situation où le ou les organes de blocage sont en position de blocage.

La partie tubulaire 41 présente une longueur, parallèlement à l'axe central, sensiblement égale à celle de la vis 23. Ainsi, la vis 23 est susceptible d'être reçue à l'intérieur de la partie tubulaire 41, sur toute ou partie de sa longueur, en fonction de la position de l'écrou 45 le long de la vis 23. La longueur de la vis correspond à la course maximum de l'organe de contrôle 9 en fonctionnement normal.

Par ailleurs, l'organe mené 29 comporte une fixation 47 solidarisant l'organe mené à l'organe de contrôle 9. La fixation 47 est portée par une extrémité inférieure 49 de la partie tubulaire 41.

L'organe d'application du couple rotatif 27 est prévu pour transmettre un couple rotatif depuis le rotor 19 à l'organe menant 21. On entend ici par organe d'application la partie du dispositif de liaison 25 coopérant directement avec l'organe menant 21, et plus précisément, avec la partie de liaison 37 de celui-ci.

Avantageusement, l'organe d'application 27 comprend une pluralité d'éléments rotatifs 51 susceptibles de rouler le long de la partie de liaison 37 quand celle-ci se déplace parallèlement à l'axe central.

Par exemple, les éléments rotatifs 51 sont des galets. En variante, ceux sont des billes ou tout autre type d'éléments rotatifs. Dans une autre variante, la liaison entre le rotor 19 et l'organe menant 21 est assurée sans élément rotatif à l'aide d'une liaison de type carré mâle (côté rotor 19) / carré femelle (côté organe menant 21).

Les éléments rotatifs sont liés au rotor 19. Ils sont mobiles en rotation autour d'axes respectifs s'étendant chacun dans un plan perpendiculaire à l'axe central C. Ils sont répartis circonférentiellement autour de la partie de liaison 37 de l'organe menant 21.

De manière à permettre la transmission du couple rotatif, la partie de liaison 37, considérée en section perpendiculairement à l'axe central C, présente au moins un côté plat 53 (figure 3). Typiquement, la partie de liaison 37, considérée en section, présente autant de côtés plats 53 qu'il y a d'éléments rotatifs 51, chaque élément rotatif roulant le long d'un côté plat 53.

Dans l'exemple représenté, l'organe d'application 27 comporte quatre galets 51, disposés à 90° les uns des autres autour de l'axe central C. Par ailleurs, la partie de liaison 37 de l'organe menant 21 présente une section carrée perpendiculairement à l'axe central C. Elle comporte donc quatre côtés plats 53, perpendiculaires les uns aux autres.

En variante, l'organe d'application 27 comporte trois éléments rotatifs 51, ou cinq éléments rotatifs 51, ou plus de cinq éléments rotatifs 51.

L'organe 27 d'application du couple rotatif est situé dans ou à proximité du passage central 35. On entend par « à proximité de » le fait que l'organe d'application 27 est situé, selon l'axe central, à une distance inférieure à 50 cm du rotor 19.

Quand l'organe d'application n'est pas logé dans le passage central, il est de préférence situé sous le rotor 19. Dans une variante non préférée, il est situé au-dessus du rotor 19.

Typiquement, les éléments rotatifs 51 sont disposés dans des logements ménagés dans le rotor 19, et font saillie à l'intérieur du passage 35. Cette situation est illustrée sur les figures 2 et 3.

De ce fait, la paroi périphérique 57 délimitant le passage 35 est séparée de la partie de liaison 37 par un interstice ayant une épaisseur supérieure à 10 mm.

Ceci a d'abord pour effet de permettre la circulation du fluide primaire entre l'organe menant 21 et le rotor 19, à travers le passage 35. On réduit ainsi la perte de charge pour le fluide primaire passant à travers le mécanisme d'entrainement.

Ceci est également favorable pour le refroidissement du moteur.

Enfin, ceci permet de réduire la résistance hydromécanique quand l'organe menant 21 et l'organe mené 29 sont largués en urgence.

En variante, l'organe d'application du couple rotatif 27 ne comporte pas d'éléments rotatifs. Il comporte par exemple un ou plusieurs patins en appui coulissant contre la partie de liaison 37 de l'organe menant.

Le ou les organes de blocage 33 sont montés sur un support 59, solidaire du rotor 19. Le support 59 présente une forme cylindrique, et délimite intérieurement un conduit 60 placé dans le prolongement du passage 35.

Le dispositif de blocage 31 comporte typiquement plusieurs organes de blocage 33, répartis circonférentiellement autour de l'organe menant 21.

Le dispositif de blocage 31 comporte au moins une masse polaire 61 liée à ou aux organes de blocage 33, et au moins une bobine électromagnétique 63 coopérant avec la ou les masses polaires 61.

Par exemple, chaque organe de blocage 33 est un crochet monté pivotant sur le support 59. Le dispositif de blocage 31 comporte encore pour chaque organe de blocage 33, une biellette 64, articulée par une extrémité à l'une des masses polaires 61, et à son extrémité opposé au crochet 33.

Quand la bobine électromagnétique 63 est activée, elle sollicite magnétiquement la ou les masses polaires 61 parallèlement à l'axe central, en appui contre une butée (non représentée) ménagée sur le support 59. Dans cette position, le ou les organes de blocage 33 font saillies à l'intérieur du conduit 60 et sont placés dans une gorge 65 ménagée dans l'organe menant 21. La gorge 65 est située dans un tronçon intermédiaire de l'organe menant 21, entre la partie d'entraînement et la partie de liaison.

La gorge 65 est délimitée vers le haut par un épaulement 67, en appui contre le ou les organes de blocage 33. Le ou les organes de blocage 33 coopèrent avec l'épaulement 67 pour bloquer le déplacement de l'organe menant 21 parallèlement à l'axe central C, vers le coeur 7.

Par ailleurs, le dispositif de blocage 31 comporte encore un organe élastique 69, interposé entre l'organe menant 21 et le support 59, et sollicitant l'organe menant 21 vers le coeur 7. Dans l'exemple représenté, cet organe élastique est un ressort hélicoïdal de compression.

Quand l'alimentation électrique de la bobine 63 est coupée, la ou les masses polaires 61 ne sont plus collées contre la butée ménagée sur le support 59. Des organes élastiques non représentés font pivoter le ou les organes de blocage 33 de manière à les escamoter hors du conduit 60. Ce mouvement n'est plus empêché par la ou les masses polaires 61, maintenues électromagnétiquement contre les butées. L'organe menant 21 est alors libre de se déplacer vers le coeur 7, sous l'effet de son poids et de l'effort de propulsion appliquée par l'organe élastique 69.

Il est à noter, la vis 45 et l'écrou 23 constituent une liaison irréversible, au sens où elle est prévue pour qu'une sollicitation verticale appliquée à l'organe mené 29 ne soit pas convertie par la vis et l'écrou en un mouvement de rotation de l'organe menant 21.

De ce fait, il n'est pas nécessaire de maintenir une alimentation électrique du stator et du rotor en permanence, pour bloquer l'organe de contrôle 9 à sa position courante.

Chaque mécanisme d'entraînement 11 comporte encore un dispositif 71 de guidage en translation et de blocage en rotation de l'organe mené 29 par rapport au stator 17. Typiquement, ce dispositif 71 comporte une ou plusieurs glissières 73 d'orientation parallèles à l'axe central C, chaque glissière 73 coopérant avec une clavette 74 solidaire de l'organe mené 23. Ce dispositif permet ainsi d'empêcher la rotation de l'organe mené 29 quand l'organe menant 21 est entraîné en rotation par le rotor 19.

Chaque mécanisme d'entraînement 11 comprend encore un châssis supérieur 75 sur lequel sont montés le moteur 15 et le dispositif de blocage 31, et un châssis inférieur 77 sur lequel est monté sur le dispositif 71 de guidage en translation et de blocage en rotation.

Le châssis inférieur 77 ne porte que le dispositif de guidage en translation et de blocage en rotation 75. Il peut donc être largement ajouré de manière à faciliter la circulation du liquide primaire. Ceci contribue à réduire les pertes de charge et à faciliter le refroidissement du moteur 15 et des bobines électromagnétiques 63.

Le châssis supérieur 75 et le châssis inférieur 77 sont fixés l'un à l'autre de telle sorte que le châssis inférieur 77 soit plus près du coeur 7 que le châssis supérieur 75. En effet, les parties électriques, par exemple le moteur, les bobines électromagnétiques, les raccordements électriques et l'instrumentation, sont sensibles au rayonnement nucléaire. Il est donc avantageux de les déporter à distance du coeur 7. Le châssis inférieur ne porte que des organes mécaniques robustes, et peut donc être disposé avantageusement plus près du coeur 7.

Par ailleurs, le châssis supérieur 75 et le châssis inférieur 77 sont rigidement fixés l'un à l'autre par des organes de fixation amovibles non représentés. Ceci a pour effet de faciliter la maintenance du mécanisme d'entraînement 11. Le châssis supérieur, qui porte les éléments les plus compacts et les plus fragiles, peut être déchargé de la cuve indépendamment du châssis inférieur, et d'un bloc.

Il est à noter que l'organe menant 21 est démonté séparément du châssis supérieur et du châssis inférieur. L'organe mené 29 est démonté avec le châssis inférieur.

Le fonctionnement du réacteur nucléaire va maintenant être décrit.

On considère ici une configuration de départ dans laquelle l'organe menant 21 est bloqué en translation parallèlement à l'axe central C par rapport au rotor 19, par le dispositif de blocage 31. Cette position est appelée la position extrême haute.

Dans cette situation, la bobine électromagnétique 63 est activée, de telle sorte que la ou les masses polaires 11 sont collées électromagnétiquement contre les butées prévues à cet effet. Dans la représentation de la figure 2, elles sont ainsi sollicitées vers le haut.

Pour déplacer un organe de contrôle de la réactivité du coeur 9 vers le bas ou le haut, le stator 17 est activé et entraine en rotation le rotor 19. Le mouvement de rotation du rotor 19 est transmis à l'organe menant 21 par le dispositif de liaison 25, et plus précisément par l'organe d'application du couple rotatif 27. Les éléments rotatifs 51 sont en appui contre les côtés 53 de la partie de liaison 37, et transmettent le couple rotatif du rotor à l'organe menant 21.

Suivant le sens de rotation du rotor 19, cette rotation va être convertie en un mouvement de translation de la partie menée soit vers le haut, soit vers le bas, parallèlement à l'axe central C.

En effet, la vis 23 est entraînée en rotation, de telle sorte que l'écrou 45 se déplace en translation le long de la vis. Ceci entraine un déplacement de tout l'organe mené 29, qui entraine lui-même l'organe de contrôle 9 en translation parallèlement à l'axe central C. Ce mouvement est guidé par le dispositif de guidage 71, les clavettes 74 coulissants dans les glissières 73 prévues à cet effet.

S'il est nécessaire de descendre rapidement les organes de contrôle 9 de la réactivité du coeur à l'intérieur des assemblages de combustible nucléaire, par exemple en cas d'urgence, on coupe l'alimentation électrique de la bobine électromagnétique 63.

La ou les masses polaires 61 ne sont plus collées électromagnétiquement contre leur butée, mais sont sollicitées dans un sens conduisant à l'escamotage des organes de blocage 33, par des organes élastiques prévus à cet effet. L'organe menant 21, dans cette situation n'est plus bloqué en translation par rapport au rotor 19. L'organe élastique 69 sollicite l'organe menant 21 vers le coeur 7, celui-ci entrainant à son tour l'organe mené 29 par le biais du couple vis-écrou.

L'organe menant 21 et l'organe mené 29 se déplacent ainsi conjointement, en translation par rapport au rotor 19. La partie de liaison 37 de l'organe menant 21 se déplace à l'intérieur du passage 35.

La course en translation de l'organe menant 21 et de l'organe mené 29 dépend de la position de l'écrou 45 le long de la vis 23 au moment où l'alimentation électrique de la bobine 63 est coupée. Cette course est maximum quand l'écrou 45 est remonté au maximum le long de la vis 23, comme illustré sur la figure 2. L'organe menant 21 et l'organe mené 29 se déplacent alors jusqu'à une position extrême basse.

Il est à noter qu'aussi bien dans la position extrême haute que dans la position extrême basse, la partie de liaison 37 de l'organe menant 21 reste en prise avec l'organe d'application du couple rotatif 27.

Plus précisément, dans la position extrême haute, un premier tronçon 79 de la partie de liaison 37 coopère avec l'organe d'application du couple rotatif 27, et dans la position extrême basse un second tronçon 81 de la partie de liaison coopère avec l'organe d'application du couple rotatif 27. Le premier tronçon 79 est situé à une extrémité inférieure de la partie de liaison 37, et jouxte donc l'épaulement 67. Le second tronçon 81 est situé à une extrémité supérieure de la partie de liaison 37.

Le temps de chute de l'ensemble organe menant-organe mené est particulièrement court. En effet, du fait que la liaison vis-écrou est larguée avec l'organe menant et l'organe mené, la chute correspond à un simple mouvement de translation et non au mouvement hélicoïdal d'une vis ou d'un écrou. Les frottements mécaniques sont réduits au minimum, notamment dans le cas où l'organe d'application du couple comprend un ou plusieurs éléments rotatifs roulants le long de la partie de liaison. La résistance hydrodynamique au mouvement de chute est réduite par le fait qu'on aménage un interstice de grande épaisseur entre le rotor et la partie de liaison de l'organe menant. Par ailleurs, cette résidence hydrodynamique n'intervient que sur la hauteur du rotor, qui est faible au regard de la hauteur de l'organe menant ou de l'organe mené. Enfin, la masse de l'organe menant et de l'organe mené contribue à accélérer la chute.

Après largage de l'organe menant et de l'organe mené 29, pour ramener ceux-ci en position extrême haute, on active le stator 17, de manière à faire tourner le rotor 19 dans le sens qui entraînerait normalement l'organe mené 29 vers le coeur, c'est-à-dire vers le bas. Du fait que l'organe mené 29 est en bout de course vers le bas, ceci se traduit par une remontée de l'organe menant 21. Quand on détecte que l'épaulement 67 a atteint sa position initiale, la bobine électromagnétique 63 est réalimentée, de telle sorte que les organes de blocage 33 pivotent et viennent verrouiller l'organe menant 21 dans sa position extrême haute.

L'arrivée de l'épaulement 67 dans sa position initiale est détectée par tout moyen, par exemple par un capteur de fin de course.

La commande du dispositif de blocage est indépendante de la commande du moteur 15 permettant d'assurer la montée ou la descente de l'organe de contrôle. Ceci est particulièrement avantageux, du fait que la commande de la bobine électromagnétique 63 du dispositif de blocage est classée au plus haut niveau de sureté, ce qui n'est pas le cas de la commande du moteur 15.

Le mécanisme d'entraînement a une faible consommation électrique, donc une faible dissipation thermique, notamment parce que la manoeuvre des organes de contrôle requiert très peu d'énergie, du fait de la démultiplication par le système vis-écrou. Par ailleurs, le réarmement des organes de blocage se fait à vide, ce qui ne nécessite qu'une bobine électromagnétique de faible puissance.

On relèvera encore que l'entrefer entre le rotor et le stator ou entre la ou les masses polaires et la bobine électromagnétique qui les déplace, n'entre pas en jeu lors du largage de la partie menante et de la partie menée, ni pour le maintien de l'étanchéité dans le dispositif, ni pour la réfrigération du système. Cet entrefer peut donc être réduit au maximum, de telle sorte que le couplage électromagnétique est amélioré et la taille et la puissance des bobinages sont limitées.

De plus, le nombre et le volume des organes chemisés est particulièrement réduit. Les organes chemisés sont ceux qui doivent être isolés physiquement du liquide primaire : le rotor, le stator, la bobine électromagnétique.

## Revendications

1. Réacteur nucléaire, comprenant :
- une cuve (3) ayant un axe central (C), contenant un liquide primaire ;
- une pluralité d'assemblages de combustible nucléaire (5), formant un coeur (7) placé dans la cuve (3) ;
- une pluralité d'organes (9) de contrôle de la réactivité du coeur (7) ;
- une pluralité de mécanismes (11) d'entraînement des organes de contrôle (9) parallèlement à l'axe central (C);
chaque mécanisme d'entraînement (11) comprenant :
- un moteur (15) comportant un stator (17) et un rotor (19) susceptible d'être entraîné en rotation par le stator (17) ;
- un organe menant (21) comprenant une partie d'entraînement (23) formant l'un d'une vis ou d'un écrou ;
- un dispositif (25) de liaison en rotation de l'organe menant (21) au rotor (19), ayant un organe (27) d'application d'un couple rotatif du rotor (19) à l'organe menant (21) ;
- un organe mené (29) lié en translation à un des organes de contrôle (9) et comprenant l'autre d'une vis ou d'un écrou, la vis et l'écrou coopérant de manière à ce qu'une rotation de l'organe menant (21) par rapport au stator (17) se traduise par une translation de l'organe mené (29) parallèlement à l'axe central (C) par rapport au stator (17) ;
- un dispositif de blocage (31) comprenant au moins un organe de blocage (33) sélectivement mobile entre une position de blocage dans laquelle l'organe menant (21) est bloqué en translation parallèlement à l'axe central (C) par rapport au rotor (19), et une position de largage dans laquelle l'organe menant (21) et l'organe mené (29) sont libres en translation parallèlement à l'axe central (C) par rapport au rotor (19) entre une position extrême haute et une position extrême basse ;
**caractérisé en ce que**, dans chaque mécanisme d'entraînement (11) :
- le moteur (15) est entièrement immergé dans le liquide primaire à l'intérieur de la cuve (3) ;
- le rotor (19) présente un passage central (35), l'organe d'application du couple rotatif (27) étant situé dans ou à proximité du passage central (35) ;
- l'organe menant (21) comprend une partie de liaison (37) engagée dans le passage central (35) et coopérant avec l'organe d'application du couple rotatif (27), la partie de liaison (37) étant libre en translation dans le passage central (35) par rapport au rotor (19) quand le ou chaque organe (37) de blocage (33) est en position de largage.

2. Réacteur selon la revendication 1, **caractérisé en ce que** la partie de liaison (37) de l'organe menant (21) comprend un premier tronçon (79) coopérant avec l'organe d'application du couple rotatif (27) dans la position extrême haute, et un second tronçon (81) coopérant avec l'organe d'application du couple rotatif (27) dans la position extrême basse.

3. Réacteur selon la revendication 1 ou 2, **caractérisé en ce que** l'organe d'application du couple rotatif (27) comprend une pluralité d'éléments rotatifs (51) susceptibles de rouler le long de la partie de liaison (37) quand ladite partie de liaison (37) se déplace parallèlement à l'axe central (C).

4. Réacteur selon l'une quelconque des revendications précédentes, **caractérisé en ce que** la partie de liaison (37), considérée en section perpendiculairement à l'axe central (C), présente au moins un côté plat (53).

5. Réacteur selon l'une quelconque des revendications précédentes, **caractérisé en ce que** le passage (35) est délimité par une paroi périphérique (57) séparée de la partie de liaison (37) par un interstice d'épaisseur supérieure à 10 mm.

6. Réacteur selon l'une quelconque des revendications précédentes, **caractérisé en ce que** le ou chaque organe de blocage (33) est monté sur un support (59) solidaire du rotor (19).

7. Réacteur selon la revendication 6, **caractérisé en ce que** le dispositif de blocage (31) comprend au moins une masse polaire (61) liée à le ou un des organes de blocage et au moins une bobine électromagnétique (63) coopérant avec la ou chaque masse polaire (61), la ou chaque bobine électromagnétique (63) étant fixe en translation et en rotation par rapport au stator (17).

8. Réacteur selon la revendication 6 ou 7, **caractérisé en ce que** le dispositif de blocage (31) comprend au moins un organe élastique (69) interposé entre l'organe menant (21) et le support (59), et sollicitant l'organe menant (21) vers la position extrême basse.

9. Réacteur selon l'une quelconque des revendications précédentes, **caractérisé en ce que** chaque mécanisme d'entraînement (11) comprend un dispositif (71) de guidage en translation et de blocage en rotation de l'organe mené (29) par rapport au stator (17).

10. Réacteur selon la revendication 9, **caractérisé en ce que** chaque mécanisme d'entraînement (11) comprend un châssis supérieur (75) sur lequel sont montés le moteur (15) et le dispositif de blocage (31), et un châssis inférieur (77) sur lequel est monté le dispositif (71) de guidage en translation et de blocage en rotation, les châssis supérieur et inférieur (75, 77) étant fixés de manière amovible l'un à l'autre de telle sorte que le châssis inférieur (77) soit plus près du coeur que le châssis supérieur (75).

11. Réacteur selon l'une quelconque des revendications précédentes, **caractérisé en ce que** la vis et l'écrou constituent une liaison irréversible, prévue pour qu'une sollicitation verticale appliquée à l'organe mené (29) ne soit pas convertie en un mouvement de rotation de l'organe menant (21).

## Patentansprüche

1. Kernreaktor, aufweisend:
- einen eine Primärflüssigkeit enthaltenden Behälter (3), welcher eine zentrale Achse (C) hat,
- eine Mehrzahl von Kernbrennstoffanordnungen (5), welche einen Kern (7) bilden, der in dem Behälter (3) platziert ist,
- eine Mehrzahl von Mitteln (9) zum Steuern der Reaktivität des Kerns (7),
- eine Mehrzahl von Mechanismen (11) zum Antreiben der Steuermittel (9) parallel zur zentralen Achse (C),
wobei jeder Antriebsmechanismus (11) aufweist:
- einen Motor (15), der einen Stator (17) und einen Rotor (19) aufweist, welcher geeignet ist, um durch den Stator (17) Drehangetrieben zu sein,
- ein Führungsmittel (21), das einen Antriebsteil (23) aufweist, welcher eines von einer Schraube oder einer Mutter ausbildet,
- eine Vorrichtung (25) zum Rotationsverbinden des Führungsmittels (21) mit dem Rotor (19), welches ein Mittel (27) zum Aufbringen eines Drehmoments des Rotors (19) auf das Führungsmittel (21) hat,
- ein geführtes Mittel (29), welches mit einem von den Steuermitteln (9) translatorisch verbunden ist und das andere von einer Schraube oder einer Mutter aufweist, wobei die Schraube und die Mutter in einer Art kooperieren, in welcher eine Rotation des Führungsmittels (21) mit Bezug auf den Stator (17) in eine Translation des geführten Mittels (29) parallel zur zentralen Achse (C) mit Bezug auf den Stator (17) umgewandelt wird,
- eine Blockiervorrichtung (31), welche zumindest ein Blockiermittel (33) aufweist, welches zwischen einer Blockierposition, in der das Führungsmittel (21) mit Bezug auf den Rotor (19) parallel zur zentralen Achse (C) translatorisch blockiert ist, und einer Notablassposition selektiv bewegbar ist, in der das Führungsmittel (21) und das geführte Mittel (29) mit Bezug auf den Rotor (19) zwischen einer obersten Position und einer untersten Position parallel zur zentralen Achse (C) translatorisch frei sind,
**dadurch gekennzeichnet, dass** bei jedem Antriebsmechanismus (11):
- der Motor (15) in der Primärflüssigkeit im Inneren des Behälters (3) vollständig eingetaucht ist,
- der Rotor (19) einen zentralen Durchgang (35) hat, wobei das Drehmomentaufbringungsmittel (27) an oder nahe des zentralen Durchgangs (35) angeordnet ist,
- das Führungsmittel (21) einen Verbindungsteil (37) aufweist, welcher mit dem zentralen Durchgang (35) eingreift und mit dem Drehmomentaufbringungsmittel (27) zusammenwirkt, wobei der Verbindungsteil (37) mit Bezug auf den Rotor (19) in dem zentralen Durchgang (35) translatorisch frei ist, wenn sich das oder jedes Blockiermittel (33)(37) in der Notablassposition befindet.

2. Reaktor gemäß Anspruch 1, **dadurch gekennzeichnet, dass** der Verbindungsteil (37) des Führungsmittels (21) einen ersten Abschnitt (79), welcher mit dem Drehmomentaufbringungsmittel (27) in der obersten Position zusammenwirkt, und einen zweiten Abschnitt (81) aufweist, welcher mit dem Drehmomentaufbringungsmittel (27) in der untersten Position zusammenwirkt.

3. Reaktor gemäß Anspruch 1 oder 2, **dadurch gekennzeichnet, dass** das Drehmomentaufbringungsmittel (27) eine Mehrzahl von Drehelementen (51) aufweist, die in der Lage sind, am Verbindungsteil (37) entlang abzurollen, wenn der Verbindungsteil (37) parallel zur zentralen Achse (C) verschoben wird.

4. Reaktor gemäß irgendeinem der vorhergehenden Ansprüche, **dadurch gekennzeichnet, dass** der Verbindungsteil (37) in einem Querschnitt senkrecht zur zentralen Achse (C) betrachtet zumindest eine flache Seite (53) hat.

5. Reaktor gemäß irgendeinem der vorhergehenden Ansprüche, **dadurch gekennzeichnet, dass** der Durchgang (35) durch eine Umfangswand (57) begrenzt ist, welche vom Verbindungsteil (37) mit einem Zwischenraum der Breite von mehr als 10 mm separiert ist.

6. Reaktor gemäß irgendeinem der vorhergehenden Ansprüche, **dadurch gekennzeichnet, dass** das oder jedes Blockiermittel (33) an einer Abstützung (59) angebracht ist, die mit dem Rotor (19) fest verbunden ist.

7. Reaktor gemäß Anspruch 6, **dadurch gekennzeichnet, dass** die Blockiervorrichtung (31) zumindest eine Polmasse (61), die mit dem oder einem der Blockiermittel verbunden ist, und zumindest eine Elektromagnetspule (63) aufweist, welche mit der oder jeder Polmasse (61) zusammenwirkt, wobei die oder jede Elektromagnetspule (63) mit Bezug auf den Stator (17) translatorisch und rotatorisch fixiert ist.

8. Reaktor gemäß Anspruch 6 oder 7, **dadurch gekennzeichnet, dass** die Blockiervorrichtung (31) zumindest ein Federmittel (69) aufweist, welches zwischen dem Führungsmittel (21) und der Abstützung (59) angeordnet ist und das Führungsmittel (21) zur untersten Position vorspannt.

9. Reaktor gemäß irgendeinem der vorhergehenden Ansprüche, **dadurch gekennzeichnet, dass** jeder Antriebsmechanismus (11) eine Vorrichtung (71) zum translatorischen Führen und zum rotatorischen Blockieren des geführten Mittels (29) mit Bezug auf den Stator (17) aufweist.

10. Reaktor gemäß Anspruch 9, **dadurch gekennzeichnet, dass** jeder Antriebsmechanismus (11) ein oberes Gestell (75), an welchem der Motor (15) und die Blockiervorrichtung (31) angebracht sind, und ein unteres Gestell (77) aufweist, an welchem die Führungsvorrichtung (71) zum translatorischen Führen und rotatorischen Blockieren angebracht ist, wobei das obere und das untere Gestell (75, 77) in einer Art fixiert sind, in welcher eines an dem anderen lösbar ist, so dass sich das untere Gestell (77) näher am Kern befindet als das obere Gestell (75).

11. Reaktor gemäß irgendeinem der vorhergehenden Ansprüche, **dadurch gekennzeichnet, dass** die Schraube und die Mutter eine unumkehrbare Verbindung ausbilden, welche vorgesehen ist, um eine Vertikalvorspannung, welche auf das geführte Mittel (29) aufgebracht ist, nicht in eine Rotationsbewegung des Führungsmittels (21) umzuwandeln.

## Claims

1. Nuclear reactor, comprising:
- a vessel (3) having a center axis (C) containing a primary liquid;
- a plurality of nuclear fuel assemblies (5) forming a core (7) placed in the vessel (3);
- a plurality of members (9) for controlling the reactivity of the core (7);
- a plurality of mechanisms (11) for driving the control members (9) parallel to the center axis (C);
wherein each drive mechanism (11) comprises:
- a motor (15) comprising a stator (17) and a rotor (19) capable of being rotated by the stator (17);
- a driving member (21) comprising a driving part (23) forming one of a screw or a nut;
- a device (25) for rotating connection of the driving member (21) with the rotor (19), having a member (27) for applying a rotational torque of the rotor (19) to the driving member (21);
- a driven member (29) translationally connected to one of the control members (9) and comprising the other of a screw or a nut, wherein the screw and the nut interact so that a rotation of the driving member (21) relative to the stator (17) results in a translation of the driven member (29) parallel to the center axis (C) relative to the stator (17);
- a blocking device (31) comprising at least one blocking member (33) selectively movable between a blocking position in which the drive member (21) is locked in translation parallel to the center axis (C) relative to the rotor (19), and a releasing position in which the driving member (21) and the driven member (29) are free in translation parallel to the center axis (C) relative to the rotor (19) between an extreme high position and an extreme low position;
**characterized in that** in each drive mechanism (11):
- the motor (15) is fully immersed in the primary liquid inside the vessel (3);
- the rotor (19) has a central passage (35), wherein the rotary torque application member (27) is located in or close to the central passage (35);
- the driving member (21) comprises a connecting part (37) engaged in the central passage (35) and interacting with the rotary torque application member (27), wherein the connecting part (37) is free in translation in the central passage (35) relative to the rotor (19) when the, or each, blocking member (37) is in the releasing position.

2. Reactor according to claim 1, **characterized in that** the connecting part (37) of the driving member (21) comprises a first section (79) interacting with the rotary torque application member (27) in the extreme high position, and a second section (81) interacting with the rotary torque application member (27) in the extreme low position.

3. Reactor according to claim 1 or 2, **characterized in that** the rotary torque application member (27) comprises a plurality of rotary elements (51) capable of rolling along the connecting part (37) when the connecting part (37) moves parallel to the center axis (C).

4. Reactor according to any one of the preceding claims, **characterized in that** the connecting part (37) has at least one flat side (53) in the section perpendicular to the center axis (C).

5. Reactor according to any one of the preceding claims, **characterized in that** the passage (35) is delimited by a peripheral wall (57) separated from the connecting part (37) by a gap with a width greater than 10 mm.

6. Reactor according to any one of the preceding claims, **characterized in that** the, or each, blocking member (33) is mounted on a support (59) integral with the rotor (19).

7. Reactor according to claim 6, **characterized in that** the blocking device (31) comprises at least one polar mass (61) connected to the one or more blocking members, and at least one electromagnetic coil (63) interacting with the, or each, polar mass (61), wherein the, or each, electromagnetic coil (63) is fixed in translation and in rotation with respect to the stator (17).

8. Reactor according to claim 6 or 7, **characterized in that** the blocking device (31) comprises at least one elastic member (69) interposed between the driving member (21) and the support (59), and urging the driving member (21) to the extreme low position.

9. Reactor according to any one of the preceding claims, **characterized in that** each drive mechanism (11) comprises a device (71) for guiding the driven member (29) in translation and blocking the driven member (29) in rotation relative to the stator (17).

10. Reactor according to claim 9, **characterized in that** each drive mechanism (11) comprises an upper frame (75) on which are mounted the motor (15) and the blocking device (31), and a lower frame (77) on which is mounted the device (71) for translational guiding and rotational blocking, wherein the upper and lower frames (75, 77) are removably attached to one another so that the lower frame (77) is closer to the core than the upper frame (75).

11. Reactor according to any one of the preceding claims, **characterized in that** the screw and the nut constitute an irreversible connection, arranged such that a vertical bias applied to the driven member (29) is not converted into a rotational movement of the driving member (21).
